# EUROPEAN PATENT SPECIFICATION

(11) **EP 2 242 801 B1**
(45) Date of publication and mention of the grant of the patent: **04.09.2013**
(21) Application number: 09706048.7
(22) Date of filing: 28.01.2009
(51) Int. Cl.: C08L 55/02, C08L 69/00

(54) **THERMOPLASTIC COMPOSITION AND USE FOR LARGE PARISON BLOW MOLDING APPLICATIONS**
THERMOPLASTISCHE ZUSAMMENSETZUNG UND VERWENDUNG FÜR BLASFORMANWENDUNGEN MIT GROSSEN BLASROHLINGEN
COMPOSITION THERMOPLASTIQUE ET SON UTILISATION DANS DES APPLICATIONS DE MOULAGE PAR SOUFFLAGE DE PARAISONS DE GRANDE TAILLE

(30) Priority: 29.01.2008 US 24404 P; 02.02.2008 US 12294
(43) Date of publication of application: 27.10.2010
(73) Proprietor: Styron Europe GmbH, 8810 Horgen (CH)
(72) Inventor: JONES, Mary, Ann, Midland MI 48640 (US); DONALD, Robert, J., Midland MI 48642 (US); COSTEUX, Stephane, C., Midland MI 48640 (US); OELBERG, James, D., Saginaw MI 48603 (US); BLANK, Marisa, L., Mount Juliet TN 37122 (US); SELISKAR, James, T., Bay City MI 48706 (US)
(74) Representative: HOFFMANN EITLE
(86) International application number: PCT/US2009/000544
(87) International publication number: WO 2009/097114

(56) References cited:
- US-A- 3 130 177
- US-A- 5 965 655
- US-A1- 2002 103 296
- US-A1- 2005 234 202
- US-A1- 2006 079 615
- DATABASE CA [Online] CHEMICAL ABSTRACTS SERVICE, COLUMBUS, OHIO, US; FUJIGUCHI, HIDETOMO: "Flame-retardant resin compositions with good blow moldability and moldings therefrom" XP002522716 retrieved from STN Database accession no. 128:62320 -& JP 09 310011 A (NIHON GE PLASTICS, LTD., JAPAN) 2 December 1997 (1997-12-02)

## Description

### FIELD OF THE INVENTION

The present invention relates to shaped thermoplastics, and in one particular aspect, to thermoplastic blends suitable for large parison blow molding applications.

### BACKGROUND OF THE INVENTION

For many applications, there is a need to be able to make relatively large plastic parts exhibiting good impact resistance over a wide range of temperatures. By way of example, one particularly attractive molding application in recent years has been seat backs for automotive vehicles. In an effort to lighten vehicle weights, lower costs and improve product versatility, manufacturers have started to incorporate molded seatback designs. See, e.g., U.S. Patent Nos. 6,491,346; 6,739,673; and 7.250,091.
Seat backs employing such technology are generally capable of meeting stringent cargo retention standards, such as those imposed by United States and European government test standards for motor vehicles (e.g., as addressed in FMVSS 207, FMVSS 210, FMVSS 225 (49 CFR 571.207, .210, 225) or ECER 17 as well as the requirements of automobile original equipment manufacturers and their suppliers.

The success of these seat backs has imposed new challenges to materials suppliers, particularly in regard to the need to improve manufacturing efficiencies. For example, there is an ongoing need to locate additional materials that are capable of exhibiting certain attractive properties in the resulting products, but which allow for relatively fast cycle times, particularly for blow molding.

Among the suitable materials for the application are thermoplastics that employ a certain amount of a rubber particle phase. The rubber particle phase may include particles of any of a variety of sizes, and optimal size might vary from material to material. To illustrate, for some materials (e.g., acrylonitrile-butadiene-styrene or "ABS"), it is generally regarded that bigger rubber particles have the potential to exhibit improved impact properties, but that when particles become too large impact properties may deteriorate. However, when rubber particles are too large, there tends to be a reduction of melt strength, which impairs the ability to hang a relatively large parison for blow molding, and thus exposes the parison to a greater risk of necking or tearing.

To achieve a suitable melt strength, for certain conditions (e.g., at relatively low shear rates), it may also be helpful to maintain a relatively high viscosity. For example, a parison that is too fluid may exhibit relatively poor melt strength. For some materials, it has been observed that viscosity can be increased by increasing rubber content. However, at higher levels of rubber, brittleness may be observed in some materials, such as in blends in which the rubber loading has an effect of changing the viscosity ratio of the material and coarsening the overall morphology of the material. At higher levels of rubber it is also possible that heat distortion and flexural modulus properties may be reduced.

Another approach to the improvement of melt characteristics is to introduce control over the ability of the molten plastic to retract. Too much retraction, however, tends to contribute to shrinkage in the blow molding process, and to weight build-up in the course of attempting to hang a parison.

The achievement of fast cycle times can be addressed in part by operating the screw of an extruder at a fast rate. However, at rates too high, the molten plastic will heat up and a resulting drop in melt strength may occur. The possibility of unmelted polymer is also increased at higher rates.

As can be appreciated, the ability to achieve fast cycle times, especially for larger blow molded parts, has been limited because of the relatively narrow processing windows that are realized using many existing materials that are capable of exhibiting good impact properties (especially under low temperature conditions, such as below 0°C (e.g., below -20°C)), flexural properties or both. It would therefore be attractive to have additional polymeric materials that exhibit the properties of many existing polymeric materials, but which exhibit attractive processing characteristics (e.g., melt strength, response to relatively high shear or both), so that relatively fast cycle times can be employed for blow molding relatively large parts.

Examples of efforts to address the above considerations include the use of extrusion blow molding grades of polycarbonate/acrylonitrile-butadiene-styrene materials such as PULSE ® 2200BG from The Dow Chemical Company, or CYCOLOY MC8100, available from SABIC (formerly GE Plastics).

Other examples of materials addressed in the literature include U.S. Patent Nos. 4,713,420; 4,900,786; 4,906,689; 5,087,663; 5,094,806; 5,273,706; 5,367,044; and 6,613,869; Published U.S. Patent Application Nos. 20070135570A1; and European Patent Nos. EP 0496258B1; and EP 0951511B1.
Chemical Abstract XP 002522716 retrieved from database accession number 128:62320 discloses flame-retardant blow molded articles showing heat, impact and weather resistance and comprising 100 parts by weight of polycarbonate, 20 parts by weight of acrylonitrile-butadiene-styrene (ABS), 12 parts by weight of styrene acrylonitrile (SAN), a flame retardant and a filler.
US-A-2006/079615 discloses blends of polycarbonate, high rubber graft ABS and SAN. The blends have low temperature impact strength and hydrolytic resistance.
US-A-5965655 discloses filled blends of branched polycarbonate, high rubber graft ABS and SAN. The blends have low temperature impact strength.
US-A-2005/234202 discloses blends having good mechanical properties and comprising polycarbonate and two ABS components.
US-A-3130177 discloses a polycarbonate blend comprising less than 50% by weight of graft ABS wherein the SAN phase contains 27 or 36% by weight of acrylonitrile.
US-A-2002/103296 discloses thermoplastic molding compositions comprising a branched polycarbonate, two grafted rubbers such as ABS having different rubber particle sizes and a rubber-free copolymer such as SAN.

### SUMMARY OF THE INVENTION

According to a first aspect, the present invention provides a polymeric blend composition comprising:
a. 55 to 65 parts by weight of a branched polycarbonate having a melt flow rate of 1 to 6 g/10 min measured according to ISO 1133 at 300°C and a load of 1.2 kg; and
b. greater than 30 parts by weight to less than 50 parts by weight of an acrylonitrile-butadiene-styrene (ABS) component, the ABS component including:
   i. a styrene acrylonitrile (SAN) phase including acrylonitrile in an amount greater than 25 percent by weight and less than 35 percent by weight of the SAN phase; and
   ii. a butadiene-based rubber particle phase present in an amount greater than 25 percent by weight and less than 45 percent by weight of the ABS component which includes butadiene grafted to the SAN;
wherein the polymeric blend composition has a viscosity ratio, R*, of at least 6 measured at a temperature at which the shear viscosity of the material is 20,000 poise at 100 sec⁻¹, R* being the ratio of the viscosity measured at a shear rate of 1 sec⁻¹ and the viscosity measured at a shear rate of 100 sec⁻¹.

Preferably the rubber particle phase includes a large-particle component characterized by a particle diameter of 0.22 to 0.75 µm, or a small-particle component characterized by a particle diameter of 0.03 to 0.17 µm, and wherein the sum of the number of particles of the large-particle component or the small-particle component is at least 50% of the total number of rubber particles.

Preferably the polymeric blend further comprises a fatty acid ester.

Preferably the SAN phase includes the acrylonitrile in an amount greater than 26 percent by weight of the SAN phase.

Preferably the polymeric blend composition includes polytetrafluoroethylene (PTFE), in an amount of 0.01 to 0.05 percent by weight of the polymeric blend composition.

Preferably the branched polycarbonate has a weight average molecular weight (M_{w}) of 28,000 to 36,000.

Preferably the branched polycarbonate has a melt flow rate of less than 4 g/10 min measured according to ISO 1133 at 300°C and a load of 1.2 kg.

Preferably the branched polycarbonate is a polycarbonate of bisphenol-A.

Preferably the butadiene-based rubber particle phase is present in an amount of 28 percent by weight to 34 percent by weight of the ABS component, and wherein the concentration of butadiene is 8 to 13 percent by weight of the polymeric blend composition.

Preferably the polymeric blend composition exhibits at least one or any combination of the following properties:
c. a critical stress to draw value of at least 24,000 Pa corresponding to the maximum value of stress obtained by stretching a 6 mm wide, 20 mm long polymer sample cut out of a 0.5 mm thick film compression molded at 230°C using a dual drum wind-up device at a temperature controlled to either 230°C or 240°C by a flow of hot nitrogen at a constant Hencky Strain rate of 0.1 S⁻¹;
d. a retraction amount (for 40 minute anneal) of less than 20%; or
e. a dynamic viscosity at 100 rad/sec (at 240°C.)(per ASTM D4440-07) of between 1500 and 5000 Pa-s.

Preferably the polymeric blend composition exhibits the following properties:
f. a flexural modulus (tangent) per ASTM D790-07, of at least 1800 MPa;
g. a temperature of deflection under load (DTUL, flatwise)(0.45 MPa) per ASTM D-648-07 of at least 120°C;
h. a tensile elongation per ASTM D638-03 of at least 80%; and
i. a notched Izod impact strength per ASTM D-256-06a (at -40°C) of at least 450 J/m.

Preferably, the composition exhibits:
i) heat stability as characterized by heat aging performance (as measured by ISO 188, Tensile Strength and Notched Izod (at either or both of 23°C or -40°C), % deterioration after aging for 1000 hours at 80°C) of within ±25%; or
ii) hydrolytic stability performance of the polymeric blend composition (as measured by ISO 188, Notched Izod (at either or both of 23°C or-40°C), % deterioration after aging for 500 hours at 90*C/70% relative humidity ("RH")) is within ± 50%.

According to a second aspect, the present invention provides a blow molded article which weighs more than 5 kg formed by blow molding the polymeric blend composition as defined in the above first aspect.

Preferably, the blow molded article exhibits either or both of:
i) heat aging performance (as measured by ISO 188, Tensile Strength and Notched Izod (at either or both of 23 °C or -40 °C), % deterioration after aging for 1000 hours at 80 °C) of within ± 25%; or
ii) hydrolytic stability performance of the polymeric blend composition (as measured by ISO 188, Notched Izod (at either or both of 23°C or -40°C), % deterioration after aging for 500 hours at 90°C/70%-relative humidity ("RH")) is within ± 50%; and
   wherein the blow molded article exhibits at least one or any combination of the following properties:
   i. flexural modulus (tangent) per ASTM D790-07, of at least 1800 MPa;
   ii. temperature of deflection under load (DTUL, flatwise)(0.45 MPa) per ASTM D-648-07 of at least 120°C;
   iii. temperature of deflection under load (DTUL, flatwise) (1.81 MPa) per ASTM D648-07 of at least 95°C;
   iv. tensile elongation per ASTM D638-03 of at least 80%;
   v. notched Izod impact strength per ASTM D-256-06a (at -40°C) of at least 450 J/m; or
   vi. notched Izod impact strength per ASTM D-256-06a (at 23°C) of at least 450 J/m.

Preferably the blow molded polymeric blend article is a seat back.

Preferably the seat back exhibits at least one response selected from (1) withstanding without rupture at least 13000 Newtons in the direction in which the seat faces in a plane parallel to the longitudinal centerline of the vehicle; (2) upon rapid acceleration up to at least 20 to 30 g, substantially no fragmentation of the seat back with at least a 36 kg mass placed behind the seat back; or (3) a combination of both responses (1) and (2).

According to a third aspect, the present invention provides a method for blow molding an article comprising the steps of:
a. providing a polymeric blend composition as defined in the above first aspect;
b. introducing the polymeric blend composition into an extruder;
c. advancing the polymeric blend composition at least partially along the length of the extruder;
d. extruding a parison having a mass of at least 5 kg;
e. shaping the parison to form an article;
f. repeating steps (d) and (e) within less than 140 seconds; and
g. maintaining the polymeric blend composition at a temperature no greater than 240°C through the steps (a) through (e).

### BRIEF DESCRIPTION OF THE DRAWINGS

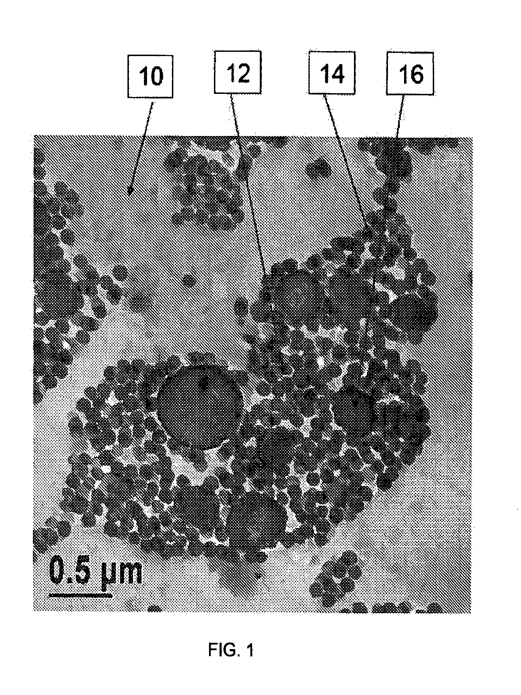

Fig. 1 depicts an illustrative microstructure of a material employing the composition of the present invention.

### DETAILED DESCRIPTION OF THE INVENTION

The present invention is directed generally at a polymeric blend composition that employs a carbonate polymeric component and a acrylonitrile-butadiene-styrene (ABS) rubber-containing component. More specifically, the invention is directed toward a polycarbonate blended with a phase including ABS rubber dispersed in a matrix including styrene-acrylonitrile (SAN), with some SAN grafted to the rubber.

The carbonate polymers employed in the present invention are advantageously aromatic carbonate polymers such as the trityl diol carbonates described in U.S. Pat. Nos. 3,036,036; 3,036,037; 3,036,038 and 3,036,039; polycarbonates of bis(arhydroxyphenyl)-alkylidenes (often called bisphenol-A type diols) including their aromatically and aliphatically substituted derivatives such as disclosed in U.S. Pat. Nos. 2,999,835; 3,028,365 and 3,334,154; and carbonate polymers derived from other aromatic diols such as described in U.S. Pat. No. 3,169,121. It is understood, of course, that the polycarbonate may be derived from (1) two or more different dihydric phenols or (2) a dihydric phenol and a glycol or an hydroxy- or acid-terminated polyester or a dibasic acid in the event a carbonate copolymer or interpolymer rather than a homopolymer is desired. Also suitable for the practice of this invention are blends of any one of the above carbonate polymers. Also included in the term carbonate polymer are the ester/carbonate copolymers of the types described in U.S. Pat. Nos. 3,169,121; 4,105,633; 4,156,069; 4,225,556; 4,260,731; 4,287,787; 4,330,662; 4,355,150; 4,360,656; 4,374,973; and 4,388.455. Polycarbonates of bisphenol-A and derivatives, including copolycarbonates of bisphenol-A, are examples of possible polycarbonates. Methods for preparing carbonate polymers for use in the practice of this invention are well known, for example, several suitable methods are disclosed in the aforementioned patents.

The branched carbonate polymers may be homopolymers. They may be blends, copolymers, or both, of a carbonate polymer with one or more additional polymer. They may include combinations of two or more branched polymers (e.g., two or more branched polycarbonates each having a different melt flow rate).

Preferred branched chain carbonate polymers used in this invention may be prepared by any suitable process. For example, they may be made by reacting a dihydric phenol with phosgene in the presence of a trihydric and/or tetrahydric phenol. U.S. Pat. No. 3,544,514 discloses the process details.
Blow moldable resins and their desired properties are taught in U.S. Pat. Nos. 4,652,602 and 4,474,999. U.S. Pat. No. 4,652,602 is particularly pertinent since it gives a definition of R* which is a measure of the ability to blow mold. See also U.S. Patent Nos. 6,613,869; 5,597,887; and 5.198,527. U.S. Patent No. 6,613,869, for example, describes a possible approach to the preparation of a branched polycarbonate, pursuant to which a melt transesterification process is employed, along with a trifunctional branching agent (e.g., 1,1,1-tris(4-hydroxyphenyl)ethane; 3,3-bis(3-methyl-4-hydroxyphenyl)-2-oxo-2,3-dihydroindole; or both)).

By way of further illustration, examples of preferred carbonate polymers are described in EP 0496258B1. For example, the polycarbonate may be described as including (A) 1 to 99% by weight of a branched polycarbonate having a branched nucleus structure derived from a branching agent represented by the general formula (1) (below) wherein R is a hydrogen atom or an alkyl group having 1 to 5 carbon atoms, and R<1> to R<6> are hydrogen atoms, alkyl groups having 1 to 5 carbon atoms or halogen atoms, respectively, a viscosity average molecular weight of 15,000 to 40,000, and an acetone-soluble matter of not more than 3.5% by weight, and (B) 99 to 1% by weight of at least one kind of polymer selected from the group consisting of styrene resin, polyamide resin, polyolefin resin, and rubber-like elastomer.

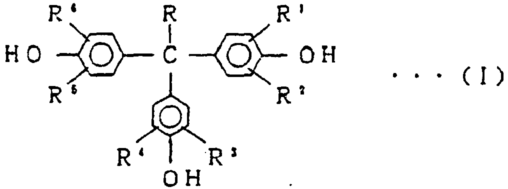

Another example of a particularly preferred carbonate polymer is described in EP 0951511B1, incorporated by reference. For example, such particularly preferred carbonate polymer includes a blend of a branched polycarbonate and a linear polycarbonate.

The carbonate polymer is present in an amount of 55 to 65 parts by weight of the resulting polymeric blend composition. The carbonate polymer may be present in an amount less than 64 parts by weight of the resulting polymeric blend composition. By way of example, the carbonate polymer is present in an amount of about 55 to about 64 parts by weight of the resulting polymeric blend composition, and more preferably about 58 to about 62 parts by weight of the resulting polymeric blend composition.

The polycarbonates will preferably exhibit a weight average molecular weight (M_{w}) of at least about 24,000, more preferably at least 26,000 and still more preferably at least about 28,000. The polycarbonates will preferably exhibit a weight average molecular weight (M_{w}) of less than about 38,000, and more preferably less than about 35,000. For example, one preferred range for M_{w} is from about 28,000 to about 33,000. "Weight average molecular weight" as employed herein is determined according to a liquid chromatography method by which 0.02 gram samples are prepared by mixing the sample for at least 8 hours with 10 mL of chloroform. The mixture is then filtered through a 0.2 µ syringe filter and is analyzed by size exclusion chromatography (SEC). Results are analyzed against a reference material with a known molecular weight. For example, a polycarbonate homopolymer having a weight average molecular weight of 24,400 is employed. For the latter, 0.014 grams of sample are mixed in 10 mL of chloroform and filtered through a 0.2um syringe filter. Samples are characterized using two mixed bed columns (e.g., available from Varian, Inc.), coupled with a ultraviolet light detector (e.g., a chromatography absorbance detector, such as Model 757 available from Applied Biosystems). Column temperature is kept at about 35°C. Flow rate of the sample is about 1 ml/min. A tetrahydrofuran eluent is employed for providing sample sizes at about 15 µl each.

The carbonate polymer has a melt flow rate of 1 to 6 g/10 min, and more preferably at least about 1.5 g/10 min (per ISO 1133; 300°C, 1.2 kg,). The carbonate polymer preferably has a melt flow rate of less than about 5 g/10 min, and more preferably less than about 4 g/10 min (per ISO 1133; 300°C, 1.2 kg,). By way of example, the melt flow rate may range from 1.5 to 4 g/10 min. One particularly preferred melt flow rate is about 2 g/10 min.

Preferred properties and characteristics of a polycarbonate for use herein will typically include at least one or any combination of a flexural modulus (tangent) per ASTM D790-07, of at least about 1800 MPa, and more preferably at least about 2200 MPa; temperature of deflection under load (DTUL)(1.81 MPa) per ASTM D648-07 of at least about 105°C, more preferably at least about 125°C (e.g., about 130°C); tensile elongation at rupture per ASTM D638-03 (ISO 527-1) of at least about 80%, and more preferably at least about 90%, and still more preferably at least about 100%; or a notched Izod impact strength per ASTM D-256-06a (at 23°C) of at least about 450 Jim; more preferably at least about 600 J/m ; and more preferably at least about 850 J/m.

Examples of commercially available carbonate polymers include those available from The Dow Chemical Company under the designation CALIBRE® , such as the 600 series (s.g., grades 600-3 or 621-2).

The polymeric blend compositions herein also include an ABS rubber containing phase for helping to impart desired impact resistance to the articles.

An acrylonitrile-butadiene-styrene resin (ABS) is typically formed by the grafting of a styrene-acrylonitrile (SAN) copolymer onto a polybutadiene substrate particle during an emulsion polymerization process. The polybutadiene forms a rubber, the elastomeric component, which is dispersed as a discrete phase in a thermoplastic component formed by the SAN. The acrylonitrile (AN) content of the SAN is
greater than 25% by weight of the SAN phase, and more preferably is greater than about 26 % by weight of the SAN phase. The acrylonitrile (AN) content of the SAN is less than about 35% by weight of the SAN phase, and more preferably is less than about 32 % by weight of the SAN phase. For example, one particularly preferred composition includes an AN content in the SAN phase that is about 29% by weight of the SAN phase. As another example, a second particularly preferred composition includes an AN content in the SAN phase that is about 26% by weight of the SAN phase.

Though a particularly preferred rubber-containing phase is ABS, which is made to consist essentially of acrylonitrile, butadiene and styrene, it is possible that other monomers can be substituted or mixed in with them.

The rubber-containing phase (e.g., the ABS) used in this invention can be made by any of the various methods described in the art, such as is exemplified by U.S. Patent No. 5,087,663, incorporated by reference. See also, U.S. Patent No. 4,713,420 (incorporated by reference), which illustrates an example of rubber modified styrene-acrylonitrile polymers.

One approach is to mix (e.g., melt blend) a concentrate of diene containing rubber (e.g., a concentrate that includes butadiene, as will be discussed), with a SAN material, such as TYRIL® 125 or TYRIL® 124, available from The Dow Chemical Company.

The ABS phase is present in an amount of less than 50 parts by weight of the resulting polymeric blend composition, and preferably is a minority polymeric constituent (by weight) of the resulting polymeric blend composition. More preferably, it is present in an amount of less than about 45 parts by weight of the resulting polymeric blend composition. The ABS phase is present in an amount greater than 30 parts by weight of the resulting polymeric blend composition, and more preferably in an amount greater than 36 parts by weight of the resulting polymeric blend composition. By way of example, the ABS phase is present in an amount of 36 to 45 parts by weight of the resulting polymeric blend composition, and more preferably 38 to 42 parts by weight of the resulting polymeric blend composition.

The ABS phase (i.e., ABS component) includes rubber particles dispersed within a polymeric matrix, such as one that includes or consists essentially of styrene-acrylonitrile ("SAN"). More specifically, it is preferred that dispersed throughout an SAN phase, there will be a plurality of rubber particles, preferably including diene rubber (e.g., butadiene) particles, and more preferably including diene rubber particles at least a portion of which are grafted with the SAN. More preferably, at least 50 % (and more preferably at least 75%) by number of the rubber particles can be classified by a size distribution that falls within at least two ranges, (e.g., for yielding a bi-modal particle size distribution). For example, at least 50 % (and more preferably at least 75%) by number of the rubber particles are characterized as having one of two particle sizes (expressed herein as particle diameter) falling within the range of about 0.03 to about 0.17 microns, and more preferably about 0.05 to about 0.14 microns (referred to as a "small-particle rubber component"); or about 0.22 to about 0.75 microns, and more preferably about 0.3 to about 0.5 microns (referred to as a "large-particle rubber component").

The ABS component includes a butadiene-based rubber particle phase and an SAN phase. The butadiene-based rubber particle phase is present, in an amount less than 45 percent by weight, more preferably less than about 40 percent by weight, and most preferably less than about 34 percent by weight of the ABS component. The butadiene-based rubber particle phase is present in an amount greater than 25 parts by weight, and more preferably greater than about 28 parts by weight of the ABS component.

Rubber particle size is determined by transmission electron microscopy (TEM) and image analysis. More specifically, samples are trimmed, polished and then stained in 2% osmium tetroxide for about 16 to 24 hours at room temperature. Samples are then rinsed in water for about 10 minutes and air dried at room temperature. The samples are sectioned into 85 nm section thickness, with a Leica UC6 microtome using a diamond knife. Thin sections are collected onto 400 mesh copper grids and examined with a JEOL JEM-1230 TEM operating at an accelerating voltage of 120kV. Digital images are obtained, such as with a Gatan Multiscan CCD camera and may be saved (e.g., in tiff format).

A combination of the Leica QWIN software and an electronic spreadsheet (e.g., Microsoft Excel) is used to analyze the TEM images to determine the percent rubber present. First the software is calibrated to the scale of the image. All images undergo a sequence of formatting within Leica QWIN software, including thresholding, binary amending, binary segmenting and field measuring to determine the area percentage of total rubber present. After this the larger agglomerated particles are removed from the image to determine the total percentage of small unagglomerated rubber. From these measurements total percentage of larger agglomerated particles are calculated (e.g., using the electronic spreadsheet such as Excel). Finally the percentage of unagglomerated versus agglomerated rubber can be calculated.

Similar results may also be possible using atomic force microscopy and image analysis, or another suitable microscopy and imaging technique that includes steps of magnifying a microstructure for resolution on a micron level or finer, obtaining an image of the magnified microstructure, and measuring the relative sizes, proportions, or both, of the respective phases in the image (e.g., by examining areas occupied in the image of the sample section).

By way of a very specific example, AFM can be used to generate images of the rubber morphology. Particle size data may be generated by using Wavemetrics Igor Pro software (version 5.0.2.0) to first generate binary (black & white images) from the image created by the Veeco instruments Nanoscope software (version 5.12r3). Once converted to binary it is then processed by Leica Qwin software, generating the particle size analysis.

The small-particle rubber component is present in an amount of about 15 to about 75 percent by section area of the total amount of rubber. The large-particle rubber component is present in an amount of about 85 to about 25 percent by section area of the rubber. One of either the small-particle rubber component or the large-particle rubber component is present in an amount of about 20 to about 40 percent by section area of the total amount of rubber, while the other of the small-particle rubber component or the large-particle rubber component is present in an amount of about 80 to about 60 percent by section area of the total amount of rubber. For example, the small-particle rubber component may be present in an amount of about 20 to about 40 percent by section area of the total amount of rubber (e.g., about 25 percent), while the large-particle rubber component is present in an amount of about 80 to about 60 percent by section area of the total amount of rubber (e.g., about 75 percent). Alternatively, the large-particle rubber component may be present in an amount of about 20 to about 40 percent by section area of the total amount of rubber (e.g., about 33 percent), while the small-particle rubber component is present in an amount of about 80 to about 60 percent by section area of the total amount of rubber (e.g., about 67 percent).

Fig. 1 illustrates an example of a microstructure in accordance with the present invention. It is seen that a polycarbonate phase **10** has an ABS phase **12** distributed throughout. The ABS phase, in turn, includes a small-particle rubber component including a plurality of smaller particles **14** and a large-particle rubber component, including a plurality of larger, agglomerated particles **16.**Rubber particles may be generally substantially spherical in shape typically deeper within the part. Rubber particles may be elongated (not shown) and have an aspect ratio (ratio of the length to diameter) of at least about 1.1:1, or even at least about 1.5:1 near the surface of the part.

The manner of arriving at the blend compositions of the present invention may be any suitable manner for achieving the rubber particle sizes and distributions described in the foregoing. One approach contemplates blending a desired rubber containing phase (e.g., ABS) with a carbonate polymer (e.g., a branched polycarbonate). Another approach contemplates, blending a styrene acrylonitrile copolymer and/or a desired rubber containing phase (e.g., ABS) with a carbonate polymer (e.g., a branched polycarbonate), and also adding a concentrate that includes rubber in a relatively large proportion (e.g., in an amount of at least about 50% by weight rubber of the concentrate, and more preferably at least about 55 % by weight rubber of the concentrate; generally including about 93% polybutadiene), and which may also include styrene, acrylonitrile or both. In the latter, the rubber may be prepared from an art-disclosed emulsion seed latex process. The rubber concentrate may include a relatively high rubber content emulsion graft polymerized elastomeric material, such as butadiene rubber particles grafted with a mixture of styrene and acrylonitrile. A particularly attractive rubber concentrate is as described at column 2, lines 17-62 of U.S. Patent No. 4,713,420 see also, U.S. Patent No. 4,419,496. The rubber concentrate may thus include rubber particles obtained from a controlled agglomeration of rubber latex particles, using a suitable agglomeration agent. An example of a method that may be suitable for the preparation of include a rubber emulsion graft polymerized elastomeric material is found in U.S. Patent No. 3,130,177. Examples of alternative rubber-containing materials that may be employed include those available commercially from Chemtura under the designation BLENDEX® (e.g., grades 338, 360 or a combination thereof).

The overall resulting concentration of butadiene in the final polymeric blend compositions of the present invention is preferably at least about 8 percent by weight, and more preferably at least about 10 percent by weight. The overall resulting concentration of butadiene in the final polymeric blend compositions of the present invention is typically less than about 20 percent by weight, preferably less than about 18 percent by weight, more preferably less than about 13 percent by weight, and most preferably is less than about 12 percent by weight.

The polymeric blend compositions herein may further include any of a variety of art-disclosed additives. By way of example, it is possible to include one or any combination of lubricants, mold release, stabilizers (e.g., anti-oxidants, thermal stabilizers, light (e.g., IR, UV or both) stabilizers or any combination thereof), dyes, pigments, flame retardant, organic or inorganic fillers or fibers, plasticizers, or the like, in their respective art-disclosed quantities. Preferably, the polymeric blend compositions will include a lubricant, a stabilizer, or both.

Colorant may be introduced as part of a suitable color concentrate, which may include pigment, dye or other colorant dispersed in a compatible polymeric carrier. The colorant may include, for example, carbon black in an amount of less than about 0.2 (e.g., about 0.1) percent by weight of the polymeric blend composition (e.g., carbon black having a mean particle size per ASTM D-3849-07 of less than about 35 microns, and still more preferably less than about 25 microns (e.g., about 17 microns)).

Among the surprising advantages of the present invention is that unexpectedly superior heat aging characteristics, hydrolytic stability or both is believed possible with or without the use of certain additives. For example one or both of the following may be realized: heat aging performance (as measured by ISO 188, Tensile Strength and Notched Izod (at either or both of 23°C or -40°C), % deterioration after aging for 1000 hours at 80°C) may be within ± 25%, and still more preferably may be within ±15%; or hydrolytic stability performance of the polymeric blend composition (as measured by ISO 188, Notched Izod (at either or both of 23°C or -40°C), % deterioration after aging for 500 hours at 90°C/70% relative humidity ("RH")) may be within ± 50%, more preferably may be within ± 25%, and still more preferably may be within ±10%.

By way of example, an anti-oxidant may be employed, such as a phenolic anti-oxidant, and more specifically a monofunctional hindered phenolic anti-oxidant, such as octadecyl-3,5-di-tert-butyl-4-hydroxyhydrocinnamate (e.g., Irganox ® 1076, from Ciba Geigy Corp.).

When a stabilizer (e.g., an anti-oxidant) is employed, at least about 0.01 percent by weight of the overall composition is employed, more preferably at least about 0.1 percent by weight of the overall composition is employed. No greater than about 2 percent by weight of the overall composition is employed, and more preferably, no greater than about 1 percent by weight of the overall composition is employed.

It is also possible to employ a lubricant alone or in combination with the stabilizer (e.g., a lubricant in combination with an anti-oxidant). By way of example, such a lubricant additive may include a fatty acid ester, or even an alkyl ester, and more preferably a di-alkyl ester, such as octyl dodecyl stearate. An example of one preferred commercially available material is CETIOL G20S, available from Cognis. When employed, the lubricant is employed in an amount of at least about 0.01 percent by weight of the overall composition is employed, more preferably at least about 0.1 percent by weight of the overall composition is employed. No greater than about 2 percent by weight of the overall composition is employed, and more preferably, no greater than about 1 percent by weight of the overall composition is employed.

It is possible that the polymeric blend compositions herein may further include a fibril forming fluorinated olefin (e.g., polytetrafluoroethylene (PTFE)), such as according to the teachings of U.S. Patent No. 5,273,706, hereby incorporated by reference. The fluorinated polyolefin (e.g., PTFE) is present in an amount up to about 0.5 percent by weight of the polymeric blend composition, and more preferably an amount up to about 0.05 percent by weight of the polymeric blend composition. It may be present in an amount above about 0.001 percent by weight of the polymeric blend composition, and more preferably an amount above about 0.01 percent by weight of the polymeric blend composition. For example, it may be possible to employ fibrils of a fluorinated olefin such as PTFE, such as fibrils having a thickness less than about 100 nm (e.g., Dyneon™ MM 5935 EF, available from 3M), in an amount of about 0.001 to about 0.5 percent by weight of the polymeric blend composition, and more preferably about 0.01 to about 0.05 percent by weight of the polymeric blend composition. However, one preferred embodiment contemplates the omission of any such fluorinated olefin, such that the polymeric blend composition is free of fluorinated olefin, and more particularly is free of PTFE.

Turning to the method of the present invention, one particularly preferred method for making an article includes blow molding an article. One such method generally includes steps of manufacturing a parison using a polymeric blend composition as taught herein, and thereafter shaping the parison. By way of example, an extrusion blow molding method may be employed pursuant to which the polymeric blend composition is introduced into an extruder, and advanced at least partially along the length of the extruder in a molten state, using a suitable screw (e.g., a barrier screw). The polymeric blend composition may be passed into an accumulator head, from which it is discharged to flow about a mandrel (e.g., a torpedo-shaped mandrel), which is surrounded by a die. The die and mandrel make up an opening (e.g., an annulus) through which the resin melt stream forms the parison as it flows out from, and becomes suspended or "hung" from the die). The ingredients of the polymeric blend composition may be mixed prior to or during the introduction into the extruder. One approach is to separately provide the carbonate polymer and the rubber-containing phase ingredients. For example, in one particular aspect, the ABS component is provided as a mixture of a grafted rubber concentrate and SAN (e.g., the grafted rubber concentrate is present in an amount that is below about two times the about of the SAN, and more preferably it is about 1.2 to about 1.8 times the amount of the SAN).

As indicated, the invention herein is particularly useful for making relatively large parts, such as parts that weigh more than about 5 kg, more preferably more than about 8 kg, and still more preferably more than about 10 kg. Accordingly, it is contemplated that the methods herein will include a step of extruding a parison having a mass of at least about 5 kg, more preferably more than about 8 kg, and still more preferably more than about 10 kg.

The steps of blow molding may employ any suitable conditions for introducing a gas into a hollow interior portion of the parison (while it is in a softened condition) to inflate the parison against a mold wall of suitable geometry. The resulting article is cooled, the mold is opened and the article ejected.

Throughout the processing steps herein the polymeric blend composition employed preferably will exhibit one or any combination of the processing characteristics discussed further herein. Further, it is also preferred throughout the process to maintain the polymeric blend composition at a temperature no greater than about 250°C, more preferably 240°C (e.g., about 235°C or less).

Though described in connection with a particularly preferred method of extrusion blow molding, the present invention is not limited to such method. Other blow molding approaches may be employed such as injection blow molding, stretch blow molding or some other blow molding operation.

The methods herein are preferably practiced in an intermittent manner, periodically repeating steps of forming the parison and blow molding an article. One preferred method contemplates a relatively rapid cycle time between completion of successive articles, e.g., the steps of forming the parison and blow molding an article is done over a period of less than 3 minutes. For example, the steps of forming the parison and blow molding the article may be repeated within less than about 140 seconds, or possibly even less than about 120 seconds. For instance, it is possible using a single production line to produce three or more, and more preferably 10 or more, and still more preferably 50 or more articles (each weighing more than about 5 kg), with a period less than 3 minutes of each other, more preferably less than 140 seconds of each other, and still more preferably less than 120 seconds of each other.

From the time the polymeric blend composition of the present invention is introduced into an apparatus for forming a parison (e.g., the extruder) and then blow molding it, the temperature of the polymeric blend composition is maintained at a temperature no greater than about 240°C (e.g., about 235°C or less).

It is also possible that articles made according to the present methods may be subjected to one or more secondary operations for forming a finished article. For example, the articles may be surface treated, thermoformed, welded, adhesively bonded to another material, or any combination thereof. It should also be realized that the compositions herein are not limited only to blow molding applications. They may find suitable use in other shaping methods, such as injection molding, thermoforming, extrusion, or otherwise.

Compositions in accordance with the teachings of the present invention will exhibit a number of characteristics that make them attractive for applications requiring impact resistance. For example, the compositions may exhibit excellent blow mold characteristics, particularly for extrusion blow molding large articles (e.g., greater than about 5 kg), other excellent processing characteristics, excellent physical properties, or any combination thereof.

One preferred characteristic of the present invention that make the compositions herein attractive for blow molding large articles is that the polymeric blend compositions exhibit an R* value of at least about 4.5, more preferably at least about 5.5, and still more preferably at least about 6. The R* value is a value that correlates generally with the ability to blow mold a material, and is determined according to the teachings of U.S. Patent Nos. 4,652,602 and 4,900,786.
In general, it is the ratio of the low shear rate (1 sec⁻¹) viscosity and the high shear rate (100 sec⁻¹) viscosity at the optimum processing temperature as determined in a viscometer.

The overall resulting polymeric blend composition will preferably exhibit other attractive processing characteristics that include at least one of the following characteristics, more preferably at least two, still more preferably at least three and even still more preferably all of the following characteristics:
A) good melt strength characteristics, as exemplified by a critical stress to draw value of at least about 24,000 Pa, more preferably at least about 34,000 Pa, and still more preferably at least about 44,000 Pa (e.g. it may be on the order of about 60,000 Pa or higher);
B) a retraction amount (for 40 minute anneal) of less than about 25%, and more preferably less than about 20%;
C) a dynamic viscosity at 100 rad/sec (at 240° C.)(per ASTM D4440-07) of between about 1500 and about 5000 Pa-s, and more preferably between about 2000 and about 4000 Pa-s; in one preferred embodiment the dynamic viscosity at 100 rad/sec (at 240° C.)(per ASTM D4440-07) is below about 4000 Pa-s, and more preferably below about 3000 Pa-s; and
D) a melt flow rate (per ISO 1133; 265°C, 5 kg,) of at least about 0.5 g/10 min and more preferably at least about 1 g/10 min; a melt flow rate (per ISO 1133; 265°C, 5 kg,) of less than about 5 g/10 min and more preferably less than about 3.5 g/10 min (by way of example, one preferred range for the overall resulting composition melt flow rate (per ASTM D1238-04c (ISO 1133-1991); 265°C, 5 kg,) is about 1.5 g/10 min to about 3.5 g/10 min).

"Critical stress to draw" values herein are obtained by stretching a thin polymer sample using a dual drum wind-up device as disclosed in U.S. Patent No. 6,691,569 (incorporated by reference), such as the SER (Xpansion Instruments, Tallmadge, OH (USA)) or the EVF (TA Instruments, New Castle, Delaware (USA). Strips (6mm wide, 20mm long) are cut out of a 0.5 mm thick compression molded films. The films are compression molded at 230°C. The wind-up device is fitted inside the environmental chamber of an ARES rheometer (TA Instruments), in which the temperature is controlled to either 230°C or 240°C by a flow of hot nitrogen. As the drums are counter-rotated at the appropriate constant angular velocity, a constant Hencky strain rate of 0.1s⁻¹ is obtained and the time-dependent stress is determined from the measured torque and the sample time-dependent cross-section. The critical stress to draw is determined as the maximum value of the stress, measured in Pa.

The "retraction amount (at 40 minute anneal)" herein is determined by extruding strands with a die diameter of about 1.27 mm, collecting strands at every 5 mm of ram travel, with a capillary rheometer at 235°C. Collected strands are annealed in an oven for 10 minutes at 200°C, and then 50 minutes at 220°C, removing the samples every 10 minutes to measure the change in length. Results are reported as percentage change in strand length relative to the original strand length at the 40 minute annealing time.

The resulting polymeric blend composition of the present invention will also exhibit attractive mechanical or thermal properties, and preferably at least one of the following properties, more preferably at least two of the following properties, still more preferably at least three of the following properties, even still more preferably at least four of the following properties, and yet even still more preferably all of the following properties:
A) flexural modulus (tangent) per ASTM D790-07, of at least about 1800 MPa, and more preferably at least about 2070 MPa;
B) temperature of deflection under load (DTUL, flatwise)(0.45 MPa) per ASTM D-648-07 of at least about 120°C, and more preferably at least about 130°C;
C) temperature of deflection under load (DTUL, flatwise) (1.81 MPa) per ASTM D648-07 of at least about 95°C, and more preferably at least about 105°C; or
D) tensile elongation per ASTM D638-03 of at least about 80%, and more preferably at least about 95%;
E) a notched lzod impact strength per ASTM D-256-06a (at -40°C) of at least about 450 J/m; and more preferably at least about 600 J/m, and still more preferably at least about 800 J/m; or
F) a notched Izod impact strength per ASTM D-256-06a (at 23'C) of at least about 450 J/m; and more preferably at least about 600 J/m, and still more preferably at least about 800 J/m.

The polymeric blend compositions also exhibit attractive surface characteristics that make them well-suited for accepting a coating, such as a primer, a paint, an adhesive or any combination thereof. For example, the polymeric blend compositions exhibit good paintability with high organic solvents paints, especially those paint systems employed for coating parts for automotive exterior parts.

The polymeric blend compositions find particularly attractive application as materials for blow molding articles that are larger than about 5 kg, and possibly larger than about 10 kg. The articles will typically throughout the article a minimum wall thickness of at least about 0.5 mm, and more preferably at least about 1 mm, and still more preferably at least about 2 mm. The articles will typically have a wall thickness of less than about 10 mm, and more preferably less than about 7 mm, and still more preferably less than about 5 mm. For example, a typical minimum wall thickness throughout an article herein may range from about 0.5 to about 10 mm, and more preferably about 2 to about 7 mm. See also, U.S. Patent No. 6,491,346; 6,739,673; or 7,250,091, all incorporated by reference.

As will be appreciated from the above, preferred seating systems made using blow molded seat backs incorporating the compositions of the present invention (especially if designed in accordance with the teachings of one or more of U.S. Patent Nos. 6,491,346; 6,739,673; or 7,250,091, all incorporated by reference) consistently should pass United States and European government test standards for motor vehicles (e.g., as addressed in FMVSS 207, FMVSS 210, FMVSS 225 (49 CFR 571.207, .210, .225) or ECE 17; all such standards being expressly incorporated by reference herein) as well as the requirements of automobile original equipment manufacturers and their suppliers.

In one embodiment, the seating system, and particularly blow molded seat backs incorporating the compositions of the present invention, will (1) be capable of withstanding without rupture at least about 11,000 Newtons in the direction in which the seat faces in a plane, parallel to the longitudinal centerline of the vehicle; (2) exhibit, upon rapid acceleration up to at least about 20 g, substantially no fragmentation of the seat back with at least a 30 kg mass placed behind the seat back; or (3) both (1) and (2). More preferably, blow molded seat backs incorporating the compositions of the present invention will (1) be capable of withstanding without rupture at least about 13,000 Newtons in the direction in which the seat faces in a plane, parallel to the longitudinal centerline of the vehicle; (2) exhibit, upon rapid acceleration of about 20 to about 30 g, substantially no fragmentation of the seat back with at least a 36 kg mass placed behind the seat back; or (3) both (1) and (2).

In yet another highly preferred embodiment, a blow molded seat back employing the composition of the present invention is incorporated into a seat assembly, and two 18 kg masses (e.g., cubes with an edge length of about 300 mm) are placed about 200 mm from the seat back. Upon rapid acceleration to at least about 20 to about 30 g, the seatback maintains the cargo disposed behind the seat back, with no visible fragmenting of the seat back or formation of sharp edges or corners.

Advantageously, in one additional preferred embodiment, the seat backs made in accordance with the present invention are capable of exhibiting a set less than 6 mm after soaking for about 4 hours at about 82°C. with an applied load of about 244 kg/m² and a momentary load of about 615 kg/m².

Articles made according to the present invention may also advantageously exhibit relatively low carbon emissions over the life of the article. For example, they may optionally exhibit an amount of less than about 100 ppm, and even more preferably less than about 50 ppm carbon as per Volkswagen standard PV-3341 (test of organic emissions from basic materials (headspace/GD/FID method)).

Though a preferred application for the compositions of the present invention are in automotive vehicle seat back assemblies (e.g., blow molded seat backs, or other seat backs in accordance with the teachings of U.S. Patent Nos. 6,491,346; 6,739,673; or 7,250,091), the articles in accordance with the present invention find use in a number of other applications. For example, the materials made according to the teachings herein find attractive application in transportation vehicles as an interior or exterior component, such as fascias, bumper beams, interior trim panels, knee bolsters, instrument panels (see, e.g., U.S. Patent No. 7,300,102 ), handles, cargo liners, or the like. Other applications may including shipping containers, storage containers, trays, shelving, playground equipment, wall dividers, appliance housings, packaging, building panels, fluid containers, or cabinetry. The articles may be shaped and will include or even consist essentially of the materials according to the teachings herein. They may be part of an assembly as well. It is possible for example that a shaped article made according to the teachings herein is laminated to another structure, such as by weld, adhesive bond, fastener or any combination thereof. It is also possible that articles may be part of an overmolded or co-injection molded assembly.

The polymeric blend compositions optionally may be further characterized as being free of any methylmethacrylate -butadiene-styrene melt strength enhancing agent. The polymeric blend compositions optionally may be free of any fluorinated polyolefin. The polymeric blend compositions optionally may have the rubber content free of rubber made from bulk polymerization. The polycarbonate of the polymeric blend compositions optionally may be prepared in the absence of a trifunctional branching agent (e.g., 1,1,1-tris(4-hydroxyphenyl)ethane; 3,3-bis(3-methyl-4-hydroxyphenyl)-2-oxo-2,3-dihydroindole; or both); the polycarbonate of the polymeric blend compositions optionally may be free of any separately prepared polycarbonate components. The polycarbonate of the polymeric blend compositions optionally may be free of any linear polycarbonate components; or any combination thereof. However, any of the foregoing features may be otherwise employed.

The following examples illustrate various aspects of the present invention. The values shown are approximate and should not be regarded as limiting of the inventions. Variations in the processing parameters are possible as disclosed throughout the specification. In addition, the results shown may vary as well (e.g., by +/- 10% of the stated values or even higher).

Examples

Example 1: A composition **X** having the ingredients listed below in Table 1 is prepared by melt blending the ingredients in a 65 mm Berstorff twin screw extruder (at 500 rpm and a barrel temperature of about 275°C). Thereafter, a parison of at least about 5 kg is formed, which is then shaped against a blow molding tool.

In the Table 1 (below), the expected characteristics and properties of the resulting polymeric blend composition are set forth. The data are obtainable according to the test methods described previously.

Table 1

| **Composition (wt. %)** | **X** |
|---|---|
| Branched polycarbonate MFR 3 | 61.4 |
| Grafted rubber concentrate | 22.49 |
| TYRIL 125 | 14.91 |
| lrganox 1076 | 0.5 |
| Cetiol G20S | 0.2 |
| Color concentrate | 0.5 |
| Total | 100 |

| **Characteristic/Property** | |
|---|---|
| % Butadiene in ABS | 30.7 |
| Critical Stress to Draw | 45,900 Pa |
| R* | 6.3 |
| % Retraction | 25 |
| -40° Notched Izod | 15 ft lbs/in notch |
| Flexural Modulus, tangent | 300,000 psi |
| DTUL (0.45 MPa) | 130 |
| DTUL (1.81 MPa) | 108 |
| Tensile elongation | 100% |
| Melt flow rate (260°C, 3.8 kg,) | 2.0 g/10 min |

Example 2: A polymeric blend composition is made to have a 60:40 proportion of polycarbonate to ABS, with a concentration of 33% rubber in the ABS phase. In one sample, a branched polycarbonate is employed. In the other, a linear polycarbonate, free of any branching, is substituted for the branched polycarbonate. Table 2 illustrates the expected results.

Table 2

| **Polycarbonate type** | **Branched** | **Linear** |
|---|---|---|
| Polycarbonate melt flow rate (260°C, 3.8 kg,) | 3 | 3 |
| Dynamic Viscosity (Eta* at 100 rad/sec (Pa-S)) | 3730 | 4759 |
| R* | 7.2 | 5.6 |
| % fiber retraction (20 minute anneal) | 13 | 18 |
| % fiber retraction (40 minute anneal) | 15 | 22 |
| Critical stress to draw (230°C; 0.1 sec⁻¹ (Pa)) | 38,400 | 32, 700 |
| Critical stress to draw (240°C; 0.1 sec⁻¹ (Pa)) | 29, 500 | 28,000 |

Example 3: The composition X of Example 1 (employing branched polycarbonate) is employed, but having varying levels of rubber in the ABS phase. The expected results are as shown in the following Table.

Table 3

| | | | | | | |
|---|---|---|---|---|---|---|
| % rubber in ABS phase | 22 | 27.5 | 33 | 38.5 | 44 | 55 |
| 23°C Notched Izod (ft lbs/in) | 12.5 | 11.1 | 9.8 | 9.0 | 8.8 | 8.1 |
| -40°C Notched Izod (ft lbs/in) | 2.2 | 4.9 | 9.2 | 7.3 | 7.0 | 6.2 |
| Flexural Modulus, tangent (ksi) | 325 | 335 | 295 | 280 | 275 | 225 |
| R* | 5.9 | 6.6 | 8.3 | 8.8 | 9.7 | > 10 |
| % fiber retraction (40 minute anneal) | 30 | 25 | 12 | 11 | 9 | 4 |
| Dynamic Viscosity (Eta* at 100 rad/sec (Pa-S)) | 2189 | 2372 | 2242 | 2631 | 2960 | > 3500 |
| Critical stress to draw (230°C; 0.1 sec⁻¹ (Pa)) | 28,225 | 42,200 | 47,950 | 59,755 | 63,390 | 137,270 |

Example 4: The composition X of Example 1 is employed and PTFE is also included to help build melt strength. The expected results are as shown in the following Table.

Table 4

| | | | | | |
|---|---|---|---|---|---|
| %PTFE | 0.005 | 0.010 | 0.050 | 0.100 | 0.200 |
| %Retraction | 13.3 | 12.8 | 19.2 | 25.7 | 29.7 |
| Critical Stress to Draw, 230°C; 0.1 sec⁻¹ (Pa) | 32,500 | 35,200 | 50,000 | 44,000 | 43,000 |

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "'x' parts by weight of the resulting polymeric blend composition" also contemplates a teaching of ranges of same recited amount of "x" in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

References to an acryl- or (meth)acryl- (or derivative terms such as "acrylate") contemplate meth-acryl-s and acryl-s (and corresponding derivative terms). The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps. All references herein to elements or metals belonging to a certain Group refer to the Periodic Table of the Elements published and copyrighted by CRC Press, Inc., 1989. Any reference to the Group or Groups shall be to the Group or Groups as reflected in this Periodic Table of the Elements using the IUPAC system for numbering groups.

As used herein the terms "polymer' and "polymerization" are generic, and can include either or both of the more specific cases of "homo-" and copolymer" and "homo- and copolymerization", respectively.

Melt flow rates and melt viscosity herein are measured on dried material (e.g., dried 105°C for at least four hours). For critical stress to draw values, materials are dried (e.g., dried 105°C for at least four hours) prior to compression molding the film.

It is understood that the above description is intended to be illustrative and not restrictive. Many embodiments as well as many applications besides the examples provided will be apparent to those of skill in the art upon reading the above description. The scope of the invention should, therefore, be determined not with reference to the above description, but should instead be determined with reference to the appended claims, along with the full scope of equivalents to which such claims are entitled. The omission in the following claims of any aspect of subject matter that is disclosed herein is not a disclaimer of such subject matter, nor should it be regarded that the inventors did not consider such subject matter to be part of the disclosed inventive subject matter.

## Claims

1. A polymeric blend composition comprising:
a. 55 to 65 parts by weight of a branched polycarbonate having a melt flow rate of 1 to 6 g/10 min measured according to ISO 1133 at 300°C and a load of 1.2 kg; and
b. greater than 30 parts by weight to less than 50 parts by weight of an acrylonitrile-butadiene-styrene (ABS) component, the ABS component including:
i. a styrene acrylonitrile (SAN) phase including acrylonitrile in an amount greater than 25 percent by weight and less than 35 percent by weight of the SAN phase; and
ii. a butadiene-based rubber particle phase present in an amount greater than 25 percent by weight and less than 45 percent by weight of the ABS component which includes butadiene grafted to the SAN;
wherein the polymeric blend composition has a viscosity ratio, R*, of at least 6 measured at a temperature at which the shear viscosity of the material is 20,000 poise at 100 sec⁻¹, R* being the ratio of the viscosity measured at a shear rate of 1 sec⁻¹ and the viscosity measured at a shear rate of 100 sec⁻¹.

2. A polymeric blend according to Claim 1, wherein the rubber particle phase includes a large-particle component **characterized by** a particle diameter of 0.22 to 0.75 *µ*m, or a small-particle component **characterized by** a particle diameter of 0.03 to 0.17 *µ*m, and wherein the sum of the number of particles of the large-particle component or the small-particle component is at least 50% of the total number of rubber particles.

3. A polymeric blend according to Claim 1, further comprising a fatty acid ester.

4. A polymeric blend composition of Claim 1, wherein the SAN phase includes the acrylonitrile in an amount greater than 26 percent by weight of the SAN phase.

5. A polymeric blend composition according to any preceding claim, wherein the polymeric blend composition includes polytetrafluoroethylene (PTFE), in an amount of 0.01 to 0.05 percent by weight of the polymeric blend composition.

6. A polymeric blend composition according to any preceding claim, wherein the branched polycarbonate has a weight average molecular weight (M_{w}) of 28,000 to 36,000.

7. A polymeric blend composition according to any preceding claim, wherein the branched polycarbonate has a melt flow rate of less than 4 g/10 min measured according to ISO 1133 at 300°C and a load of 1.2 kg.

8. A polymeric blend composition according to any preceding claim, wherein the branched polycarbonate is a polycarbonate of bisphenol-A.

9. A polymeric blend composition according to any preceding claim, wherein the butadiene-based rubber particle phase is present in an amount of 28 percent by weight to 34 percent by weight of the ABS component, and wherein the concentration of butadiene is 8 to 13 percent by weight of the polymeric blend composition.

10. A polymeric blend composition according to any preceding claim, wherein the polymeric blend composition exhibits at least one or any combination of the following properties:
c. a critical stress to draw value of at least 24,000 Pa corresponding to the maximum value of stress obtained by stretching a 6 mm wide, 20 mm long polymer sample cut out of a 0.5 mm thick film compression moulded at 230°C using a dual drum wind-up device at a temperature controlled to either 230°C or 240°C by a flow of hot nitrogen at a constant Hencky Strain rate of 0.1 s⁻¹;
d. a retraction amount (for 40 minute anneal) of less than 20%; or
e. a dynamic viscosity at 100 rad/sec (at 240°C.) (per ASTM D4440-07) of between 1500 and 5000 Pa-s.

11. A polymeric blend composition according to any preceding claim, wherein the polymeric blend composition exhibits the following properties:
f. a flexural modulus (tangent) per ASTM D790-07, of at least 1800 MPa;
g. a temperature of deflection under load (DTUL, flatwise)(0.45 MPa) per ASTM D-648-07 of at least 120°C;
h. a tensile elongation per ASTM D638-03 of at least 80%; and
i. a notched Izod impact strength per ASTM D-256-06a (at -40°C) of at least 450 J/m.

12. A polymeric blend composition according to any preceding claim, wherein the composition exhibits:
i) heat stability as **characterized by** heat aging performance (as measured by ISO 188, Tensile Strength and Notched Izod (at either or both of 23°C or -40°C), % deterioration after aging for 1000 hours at 80°C) of within ± 25%; or
ii) hydrolytic stability performance of the polymeric blend composition (as measured by ISO 188, Notched Izod (at either or both of 23°C or -40°C), % deterioration after aging for 500 hours at 90°C/70% relative humidity ("RH")) is within ± 50%.

13. A blow molded article which weighs more than 5 kg formed by blow molding the polymeric blend composition as defined in any preceding claim.

14. The blow molded polymeric blend article of Claim 13,
wherein the blow molded article exhibits either or both of:
i) heat aging performance (as measured by ISO 188, Tensile Strength and Notched Izod (at either or both of 23 °C or -40 °C), % deterioration after aging for 1000 hours at 80 °C) of within ± 25%; or
ii) hydrolytic stability performance of the polymeric blend composition (as measured by ISO 188, Notched Izod (at either or both of 23°C or - 40'C), % deterioration after aging for 500 hours at 90°C/70% relative humidity ("RH")) is within ± 50%; and
wherein the blow molded article exhibits at least one or any combination of the following properties:
i. flexural modulus (tangent) per ASTM D790-07, of at least 1800 MPa;
ii. temperature of deflection under load (DTUL, flatwise)(0.45 MPa) per ASTM D-648-07 of at least 120°C;
iii. temperature of deflection under load (DTUL, flatwise) (1.81 MPa) per ASTM D648-07 of at least 95°C;
iv. tensile elongation per ASTM D638-03 of at least 80%;
v. notched Izod impact strength per ASTM D-256-06a (at -40°C) of at least 450 J/m; or
vi. notched Izod impact strength per ASTM D-256-06a (at 23°C) of at least 450 J/m.

15. The blow molded polymeric blend article of Claim 14, wherein the article is a seat back.

16. The blow molded polymeric blend article of Claim 15, wherein the seat back exhibits at least one response selected from (1) withstanding without rupture at least 13000 Newtons in the direction in which the seat faces in a plane, parallel to the longitudinal centerline of the vehicle; (2) upon rapid acceleration up to at least 20 to 30 g, substantially no fragmentation of the seat back with at least a 36 kg mass placed behind the seat back; or (3) a combination of both responses (1) and (2).

17. A method for blow molding an article comprising the steps of:
a. providing a polymeric blend composition as defined in any of Claims 1-12;
b. introducing the polymeric blend composition into an extruder;
c. advancing the polymeric blend composition at least partially along the length of the extruder;
d. extruding a parison having a mass of at least 5 kg;
e. shaping the parison to form an article;
f. repeating steps (d) and (e) within less than 140 seconds; and
g. maintaining the polymeric blend composition at a temperature no greater than 240°C through the steps (a) through (e).

## Patentansprüche

1. Polymermischungszusammensetzung, umfassend:
a. 55 bis 65 Gew.-Teile eines verzweigten Polycarbonats mit einer Schmelzdurchflussrate von 1 bis 6 g/10 Minuten, gemessen gemäß ISO 1133 bei 300°C und bei einer Belastung von 1,2 kg;
b. mehr als 30 Gew.-Teile bis weniger als 50 Gew.-Teile einer Acrylonitril-Butadien-Styrol (ABS)-Komponente, wobei die ABS-Komponente enthält:
i. eine Styrol-Acrylonitril (SAN)-Phase, die Acrylonitril in einer Menge von mehr als 25 Gew.% und weniger als 35 Gew.% der SAN-Phase umfasst; und
ii. eine auf Butadien basierende
Kautschukpartikelphase, die in einer Menge von mehr als 25 Gew.% und weniger als 45 Gew.% der ABS-Komponente vorliegt, welche Butadien, das an SAN gepfropft ist, umfasst;
worin die Polymermischungszusammensetzung ein Viskositätsverhältnis R* von mindestens 6 aufweist, gemessen bei einer Temperatur, bei der die Scherviskosität des Materials 20.000 Poise bei 100 sec⁻¹ beträgt, worin R* das Verhältnis der bei einer Scherrate von 1 sec⁻¹ gemessenen Viskosität und der bei einer Scherrate von 100 sec⁻¹ gemessenen Viskosität ist.

2. Polymermischung gemäß Anspruch 1, worin die Kautschukpartikelphase eine Komponente mit großer Partikelgröße, die durch einen Partikeldurchmesser von 0,22 bis 0,75 µm gekennzeichnet ist, oder eine Komponente mit kleiner Partikelgröße, die durch einen Partikeldurchmesser von 0,03 bis 0,17 µm gekennzeichnet ist, umfasst und worin die Summe der Anzahl der Partikel der Komponente mit großer Partikelgröße oder der Komponente mit kleiner Partikelgröße mindestens 50 % der Gesamtanzahl der Kautschukpartikel ausmacht.

3. Polymermischung gemäß Anspruch 1, ferner umfassend einen Fettsäureester.

4. Polymermischungszusammensetzung gemäß Anspruch 1, worin die SAN-Phase das Acrylonitril in einer Menge von mehr als 26 Gew.% der SAN-Phase enthält.

5. Polymermischungszusammensetzung gemäß irgendeinem vorhergehenden Anspruch, worin die Polymermischungszusammensetzung Polytetrafluorethylen (PTFE) in einer Menge von 0,01 bis 0,05 Gew.% der Polymermischungszusammensetzung umfasst.

6. Polymermischungszusammensetzung gemäß irgendeinem vorhergehenden Anspruch, worin das verzweigte Polycarbonat ein gewichtsgemitteltes Molekulargewicht (M_{w}) von 28.000 bis 36.000 aufweist.

7. Polymermischungszusammensetzung gemäß irgendeinem vorhergehenden Anspruch, worin das verzweigte Polycarbonat eine Schmelzdurchflussrate von kleiner als 4 g/10 Minuten aufweist, gemessen entsprechend ISO 1133 bei 300°C und einer Belastung von 1,2 kg.

8. Polymermischungszusammensetzung gemäß irgendeinem vorhergehenden Anspruch, worin das verzweigte Polycarbonat ein Polycarbonat von Bisphenol A ist.

9. Polymermischungszusammensetzung gemäß irgendeinem vorhergehenden Anspruch, worin die auf Butadien basierende Kautschukpartikelphase in einer Menge von 28 Gew.% bis 34 Gew.% der ABS-Komponente vorliegt, und worin die Konzentration von Butadien 8 bis 13 Gew.% der Polymermischungszusammensetzung beträgt.

10. Polymermischungszusammensetzung gemäß irgendeinem vorhergehenden Anspruch, worin die Polymermischungszusammensetzung mindestens eine oder irgendeine Kombination der folgenden Eigenschaften aufweist:
c. einen Wert von kritischer Belastung zu Zug von mindestens 24.000 Pa, entsprechend dem Maximalwert der Belastung, der durch Strecken einer 6 mm breiten, 20 mm langen Polymerprobe, die aus einem 0,5 mm dicken Film geschnitten ist, der bei 230°C druckgeformt ist, erhalten wird, wobei eine Doppeltrommel-Aufwickelvorrichtung bei einer Temperatur, die durch den Fluss von heißem Stickstoff zu entweder 230°C oder 240°C kontrolliert ist, bei einer konstanten Hencky-Dehnungsrate von 0,1 s⁻¹ verwendet wird;
d. eine Retraktionsmenge (für 40 Minuten Wärmbehandlung) von weniger als 20 %; oder
e. eine dynamische Viskosität bei 100 Rad/Sekunde (bei 240°C) (gemäß ASTM D4440-07) von zwischen 1.500 und 5.000 Pa · sec.

11. Polymermischungszusammensetzung gemäß irgendeinem vorhergehenden Anspruch, worin die Polymermischungszusammensetzung die folgenden Eigenschaften aufweist:
f. eine Biegemodul (tangential) gemäß ASTM D790-07 von mindestens 1.800 MPa;
g. eine Deflektionstemperatur unter Belastung (DTUL, flach) (0,45 MPa) gemäß ASTM D-648-07 von mindestens 120°C;
h. eine Zugdehnung gemäß ASTM D638-03 von mindestens 80 %; und
i. eine Izod-Kerbschlagzähigkeit gemäß ASTM D-256-06a (bei -40°C) von mindestens 450 J/m.

12. Polymermischungszusammensetzung gemäß irgendeinem vorhergehenden Anspruch, worin die Zusammensetzung zeigt:
i) eine Wärmestabilität, **gekennzeichnet durch** die Wärmealterungseigenschaften (gemessen mittels ISO 188, Zugfestigkeit und Kerbschlag-Izod (bei entweder einem oder beiden von 23°C oder -40°C), als % Verschlechterung nach dem Altern für 1.000 Stunden bei 80°C) von innerhalb ± 25 %; oder
ii) eine hydrolytische Stabilitätseigenschaft der Polymermischungszusammensetzung (gemessen mittels ISO 188, Kerbschlag-Izod (bei entweder einem oder beiden von 23°C oder -40°C), in % Verschlechterung nach dem Altern für 500 Stunden für 90°C/70 % relativer Luftfeuchtigkeit ("RH") innerhalb von ± 50 %.

13. Blasgeformter Artikel, der mehr als 5 kg wiegt, gebildet durch Blasformen der Polymermischungszusammensetzung gemäß irgendeinem vorhergehenden Anspruch.

14. Blasgeformter Polymermischungsartikel gemäß Anspruch 13, worin der blasgeformte Artikel entweder eines oder beides aufweist von:
i) Wärmealterungseigenschaften (gemessen gemäß ISO 188, Zugfestigkeit und Kerbschlag-Izod (bei entweder einem oder beiden von 23°C oder -40°C), in % Verschlechterung nach dem Altern für 1.000 Stunden bei 80°C) von innerhalb ± 25 %; oder
ii) hydrolytische Stabilitätseigenschaften der Polymermischungszusammensetzung (gemessen gemäß ISO 188, Kerbschlag-Izod (bei entweder einem oder beiden von 23°C oder -40°C), in % Verschlechterung nach dem Altern für 500 Stunden bei 90°C/70 % relativer Luftfeuchtigkeit ("RH")) innerhalb von ± 50 %; und
worin der blasgeformte Artikel mindestens eines oder irgendeine Kombination der folgenden Eigenschaften aufweist:
i. ein Biegemodul (tangential) gemäß ASTM D790-07 von mindestens 1.800 MPa;
ii. eine Deflektionstemperatur unter Belastung (DTUL, flach) (0,45 MPa) gemäß ASTM D-648-07 von mindestens 120°C;
iii. eine Deflektionstemperatur unter Belastung (DTUL, flach) (1,81 MPa) gemäß ASTM D648-07 von mindestens 95°C;
iv. eine Zugfestigkeit gemäß ASTM D638-03 von mindestens 80 %;
v. eine Izod-Kerbschlagzähigkeit gemäß ASTM D-256-06a (bei -40°C) von mindestens 450 J/m; oder
vi. eine Izod-Kerbschlagzähigkeit gemäß ASTM D-256-06a (bei 23°C) von mindestens 450 J/m.

15. Blasgeformter Polymermischungsartikel gemäß Anspruch 14, worin der Artikel eine Sitzlehne ist.

16. Blasgeformter Polymermischungsartikel gemäß Anspruch 15, worin die Sitzlehne mindestens ein Merkmal erfüllt, ausgewählt aus (1) Beständigkeit, ohne Reißen, gegenüber mindestens 13.000 Newton in der Richtung, in die der Sitz in einer Ebene ausgerichtet ist, parallel zur Längs-Mittellinie des Vehikels; (2) bei rascher Beschleunigung von bis zu mindestens 20 bis 30 g im wesentlichen keine Bruchbildung der Sitzlehne, wobei mindestens 36 kg Masse hinter der Lehne platziert ist; oder (3) eine Kombination der beiden Merkmale (1) und (2).

17. Verfahren zum Blasformen eines Artikels, umfassend die Schritte:
a. Bereitstellen einer Polymermischungszusammensetzung gemäß irgendeinem der Ansprüche 1 bis 12;
b. Einführen der Polymermischungszusammensetzung in einen Extruder;
c. zumindest teilweises Vorantreiben der Polymermischungszusammensetzung entlang der Länge des Extruders;
d. Extrudieren eines Blasrohlings mit einer Masse von mindestens 5 kg;
e. Formen des Blasrohlings, um einen Artikel zu bilden;
f. Wiederholen der Schritte (d) und (e) innerhalb von weniger als 140 Sekunden; und
g. Beibehalten der Polymermischungszusammensetzung bei einer Temperatur von nicht größer als 240°C durch die Schritte (a) bis (e).

## Revendications

1. Composition d'un mélange de polymères comprenant :
a. de 55 à 65 parties en poids d'un polycarbonate ramifié ayant un indice de fluidité à chaud de 1 à 6 g/10 min mesuré selon ISO 1133 à 300 °C et sous une charge de 1,2 kg ; et
b. plus de 30 parties en poids à moins de 50 parties en poids d'une composante d'un acrylonitrile-butadiène-styrène (ABS), la composante d'ABS incluant :
i. une phase de styrène-acrylonitrile (SAN) incluant de l'acrylonitrile en une quantité supérieure à 25 pour cent en poids et inférieure à 35 pour cent en poids de la phase de SAN ; et
ii. une phase de particules de caoutchouc à base de butadiène présente en une quantité supérieure à 25 pour cent en poids et inférieure à 45 pour cent en poids de la composante d'ABS qui inclut du butadiène greffé au SAN ;
dans laquelle la composition d'un mélange de polymères a un rapport de viscosité, R*, d'au moins 6 mesuré à une température à laquelle la viscosité de cisaillement de la matière est de 20 000 poise à 100 sec⁻¹, R* étant le rapport de la viscosité mesurée à un taux de cisaillement de 1 sec⁻¹ et de la viscosité mesurée à un taux de cisaillement de 100 sec⁻¹.

2. Mélange de polymères selon la revendication 1, dans lequel la phase de particules de caoutchouc inclut une composante à grosses particules **caractérisée par** un diamètre de particule de 0,22 à 0,75 µm ou une composante à petites particules **caractérisée par** un diamètre de particule de 0,03 à 0,17 µm, et dans lequel la somme du nombre de particules de la composante à grosses particules ou de la composante à petites particules est d'au moins 50 % du nombre total de particules de caoutchouc.

3. Mélange de polymères selon la revendication 1, comprenant en outre un ester d'acide gras.

4. Composition d'un mélange de polymères selon la revendication 1, dans laquelle la phase de SAN inclut l'acrylonitrile en une quantité supérieure à 26 pour cent en poids de la phase de SAN.

5. Composition d'un mélange de polymères selon l'une quelconque des revendications précédentes, dans laquelle la composition d'un mélange de polymères inclut du polytétrafluoréthylène (PTFE), dans une quantité de 0,01 à 0,05 pour cent en poids de la composition d'un mélange de polymères.

6. Composition d'un mélange de polymères selon l'une quelconque des revendications précédentes, dans laquelle le polycarbonate ramifié a une masse moléculaire moyenne en poids (Mw) de 28 000 à 36 000.

7. Composition d'un mélange de polymères selon l'une quelconque des revendications précédentes, dans laquelle le polycarbonate ramifié a un indice de fluidité à chaud inférieur à 4 g/10 min mesuré selon ISO 1133 à 300 °C et sous une charge de 1,2 kg.

8. Composition d'un mélange de polymères selon l'une quelconque des revendications précédentes, dans laquelle le polycarbonate ramifié est un polycarbonate de bisphénol-A.

9. Composition d'un mélange de polymères selon l'une quelconque des revendications précédentes, dans laquelle la phase de particules de caoutchouc à base de butadiène est présente en une quantité de 28 pour cent en poids à 34 pour cent en poids de la composante d'ABS, et dans laquelle la concentration de butadiène est de 8 à 13 pour cent en poids de la composition d'un mélange de polymères.

10. Composition d'un mélange de polymères selon l'une quelconque des revendications précédentes, dans laquelle la composition d'un mélange de polymères présente au moins une ou une combinaison quelconque des propriétés suivantes :
c. une valeur de contrainte critique sur étirage d'au moins 24 000 Pa correspondant à la valeur maximale de contrainte obtenue en étirant une découpe de polymère de 20 mm de long et 6 mm de largeur provenant d'un film de 0,5 mm d'épaisseur moulé par compression à 230 °C en utilisant un dispositif d'enroulement à double tambour à une température régulée à 230 °C ou 240 °C au moyen d'un flux d'azote chaud à une vitesse de déformation de Hencky constante de 0,1 s⁻¹;
d. un taux de rétraction (pour un recuit de 40 minutes) inférieur à 20 % ; ou
e. une viscosité dynamique à 100 rad/sec (à 240 °C) (selon la norme ASTM D4440-07) comprise entre 1500 et 5000 Pa-s.

11. Composition d'un mélange de polymères selon l'une quelconque des revendications précédentes, dans laquelle la composition d'un mélange de polymères présente les propriétés suivantes :
f. un module d'élasticité en flexion (tangente) selon ASTM D790-07 d'au moins 1800 MPa ;
g. une température de fléchissement sous charge (DTUL, perpendiculairement à la stratification) (0,45 MPa) selon ASTM D-648-07 d'au moins 120°C;
h. un allongement par traction selon ASTM D638-03 d'au moins 80 % ; et
i. une résistance au choc Izod sur éprouvette entaillée selon ASTM D-256-06a (à -40 °C) d'au moins 450 J/m.

12. Composition d'un mélange de polymères selon l'une quelconque des revendications précédentes, dans laquelle la composition présente :
i) une stabilité thermique telle que **caractérisée par** un résultat de vieillissement à la chaleur (mesuré selon ISO 188, Résistance à la traction et Izod sur éprouvette entaillée (à 23 °C ou à -40 °C, ou aux deux températures), détérioration en % après vieillissement pendant 1000 heures à 80 °C) dans les limites de ± 25 % ; ou
ii) un résultat de stabilité hydrolytique de la composition d'un mélange de polymères (mesurée selon ISO 188, Izod sur éprouvette entaillée (à 23 °C ou à -40 °C, ou aux deux températures), détérioration en % après vieillissement pendant 500 heures à 90 °C et 70 % d'humidité relative (« RH »)) est dans les limites de ± 50 %.

13. Objet moulé par soufflage qui pèse plus de 5 kg formé par moulage par soufflage de la composition d'un mélange de polymères telle que définie dans l'une quelconque des revendications précédentes.

14. Objet fait d'un mélange de polymères moulé par soufflage selon la revendication 13, dans lequel l'objet moulé par soufflage présente l'une ou l'autre des ou les deux caractéristiques suivantes :
i) un résultat de vieillissement à la chaleur (tel que mesuré selon ISO 188, Résistance à la traction et Izod sur éprouvette entaillée (à 23 °C ou à -40 °C, ou aux deux températures), détérioration en % après vieillissement pendant 1000 heures à 80 °C) dans les limites de ± 25 % ; ou
ii) un résultat de stabilité hydrolytique de la composition d'un mélange de polymères (tel que mesurée selon ISO 188, Izod sur éprouvette entaillée (à 23 °C ou à -40 °C, ou aux deux températures), détérioration en % après vieillissement pendant 500 heures à 90 °C et 70 % d'humidité relative (« RH »)) dans les limites de ± 50 % ; et
dans lequel l'objet moulé par soufflage présente au moins une ou une combinaison quelconque des propriétés suivantes:
i. un module d'élasticité en flexion (tangente) selon ASTM D790-07 d'au moins 1800 MPa ;
ii. une température de fléchissement sous charge (DTUL, perpendiculairement à la stratification) (0,45 MPa) selon ASTM D-648-07 d'au moins 120 °C ;
iii. une température de fléchissement sous charge (DTUL, perpendiculairement à la stratification) (1,81 MPa) selon ASTM D648-07 d'au moins 95 °C ;
iv. un allongement par traction selon ASTM D638-03 d'au moins 80%;
v. une résistance au choc Izod sur éprouvette entaillée selon ASTM D-256-06a (à -40 °C) d'au moins 450 J/m ; ou
vi. une résistance au choc Izod sur éprouvette entaillée selon ASTM D-256-06a (à 23 °C) d'au moins 450 J/m.

15. Objet fait d'un mélange de polymères moulé par soufflage selon la revendication 14, l'objet étant un dossier de siège.

16. Objet fait d'un mélange de polymères moulé par soufflage selon la revendication 15, dans lequel le dossier de siège présente au moins une réponse sélectionnée parmi: (1) résister sans rupture à au moins 13 000 Newtons dans la direction dans laquelle le siège est tourné dans un avion, parallèlement à la ligne centrale longitudinale du véhicule ; (2) lors d'une accélération rapide jusqu'à au moins 20 à 30 g, substantiellement aucune fragmentation du dossier de siège avec une masse d'au moins 36 kg placée derrière le dossier de siège ; ou (3) une combinaison des deux réponses (1) et (2).

17. Procédé de moulage par soufflage d'un objet comprenant les étapes consistant à :
a) fournir une composition d'un mélange de polymères telle que définie dans l'une quelconque des revendications 1-12 ;
b) introduire la composition d'un mélange de polymères dans une extrudeuse ;
c) faire avancer la composition d'un mélange de polymères au moins partiellement, le long de la longueur de l'extrudeuse ;
d) extruder une paraison ayant une masse d'au moins 5 kg ;
e) façonner la paraison pour former un objet ;
f) répéter les étapes (d) et (e) en moins de 140 secondes ; et
g) maintenir la composition d'un mélange de polymères à une température non supérieure à 240 °C au cours des étapes (a) à (e).
